# EUROPEAN PATENT APPLICATION

(11) **EP 4 786 242 A1**
(43) Date of publication of application: **05.08.2026**
(21) Application number: 26153087.7
(22) Date of filing: 20.01.2026
(51) Int. Cl.: B60K 35/22, A01C 11/02, B60K 35/28, B60K 35/60, B60R 11/02

(54) **WORK VEHICLE**

(30) Priority: 27.01.2025 JP 2025011098
(71) Applicant: Yanmar Holdings Co., Ltd., Osaka (JP)
(72) Inventor: MIYAI, Kenichi, Okayama-shi (JP); SHU, Yuzhuo, Osaka-shi (JP); OKAMATSU, Taro, Osaka-shi (JP)
(74) Representative: Sekiguchi, Kazuya

(57) **Abstract**

[Problem] It is possible to improve visibility at a time when an operator sits on an operator's seat and looks at a display unit and achieve postures of the display unit and the operation unit matching the operator.

[Solution] The work vehicle includes a steering handle in front of an operator's seat. A work vehicle includes: a display unit that is disposed on a side of the steering handle; an operation unit that is disposed on the side of the steering handle and apart from the display unit; and a support part that supports the display unit and the operation unit. The display unit and the operation unit are supported such that postures of the display unit and the operation unit can be changed with respect to the support part.

## Description

### TECHNICAL FIELD

The present invention relates to a work vehicle such as a rice transplanter.

### BACKGROUND ART

Conventionally, there is known a rice transplanter described in, for example, Patent Document 1. In the rice transplanter, an operation unit to be operated at a time of setting automatic running is provided on a side of a steering handle.

### PRIOR ART DOCUMENT

### PATENT DOCUMENT

Patent Document 1: JP-A-2020-135802

### SUMMARY OF INVENTION

### TECHNICAL PROBLEM

In the rice transplanter described in Patent Document 1, a display unit is disposed in front of the steering handle (on an opposite side to an operator's seat). According to this configuration, there is the steering handle in a line-of-sight direction in which an operator sitting on the operator's seat looks at the display unit. Therefore, there is a concern that the steering handle blocks the operator from visually checking the display unit, and visibility of the display unit lowers. Furthermore, the operators sitting on the operator's seat have various body shapes (e.g., the height, the sitting height, and the like). Hence, it may be concerned that, if installation angles of the display unit and the operation unit are fixed, some operators have difficulty in visually checking the display unit and operating the operation unit.

The present invention has been made to solve the above problem, and an object of the present invention is to provide a work vehicle that can improve visibility at a time when an operator sits on an operator's seat and looks at a display unit, and achieve postures of the display unit and an operation unit matching the operator.

### SOLUTION TO PROBLEM

A work vehicle according to one aspect of the present invention is a work vehicle that includes a steering handle in front of an operator's seat, and includes: a display unit that is disposed on a side of the steering handle; an operation unit that is disposed on the side of the steering handle and apart from the display unit; and a support part that supports the display unit and the operation unit, and the display unit and the operation unit are supported such that postures of the display unit and the operation unit can be changed with respect to the support part.

### ADVANTAGEOUS EFFECTS OF INVENTION

It is possible to improve visibility at a time when an operator sits on an operator's seat and looks at a display unit and achieve postures of the display unit and the operation unit matching the operator.

### BRIEF DESCRIPTION OF DRAWINGS

Fig. 1 is a side view illustrating a schematic configuration of a rice transplanter that is an example of a work vehicle according to an embodiment of the present invention;
Fig. 2 is a perspective view illustrating an operation column of the rice transplanter as viewed diagonally from behind;
Fig. 3 is a perspective view illustrating an enlarged display unit and operation unit of the rice transplanter;
Fig. 4 is a front view illustrating a main body part of the display unit as viewed from a direction vertical to a display screen;
Fig. 5 is an explanatory diagram illustrating an example of various pieces of information displayed on a center display unit of the main body part;
Fig. 6 is a front view of a first operation part of the operation unit as viewed from a button pressing direction;
Fig. 7 is a front view illustrating another example of the first operation part;
Fig. 8 is a front view illustrating a second operation part of the operation unit as viewed from the button pressing direction;
Fig. 9 is a block diagram illustrating a configuration of a control system of the rice transplanter;
Fig. 10 is a perspective view illustrating a schematic configuration of a support part of the rice transplanter;
Fig. 11 is an exploded perspective view of the display unit, the operation unit, and the support part;
Fig. 12A is a side view illustrating a state before the display unit and the operation unit change postures with respect to the support part;
Fig. 12B is a side view illustrating a state after the display unit and the operation unit change the postures with respect to the support part;
Fig. 13A is a plan view schematically illustrating a state before the display unit and the operation unit turn about a third shaft part;
Fig. 13B is a plan view schematically illustrating a state after the display unit and the operation unit turn about a third shaft part; and
Fig. 14 is a plan view schematically illustrating a state after the display unit and the operation unit turn about a fourth shaft part from the state in Fig. 13A.

### DESCRIPTION OF EMBODIMENTS

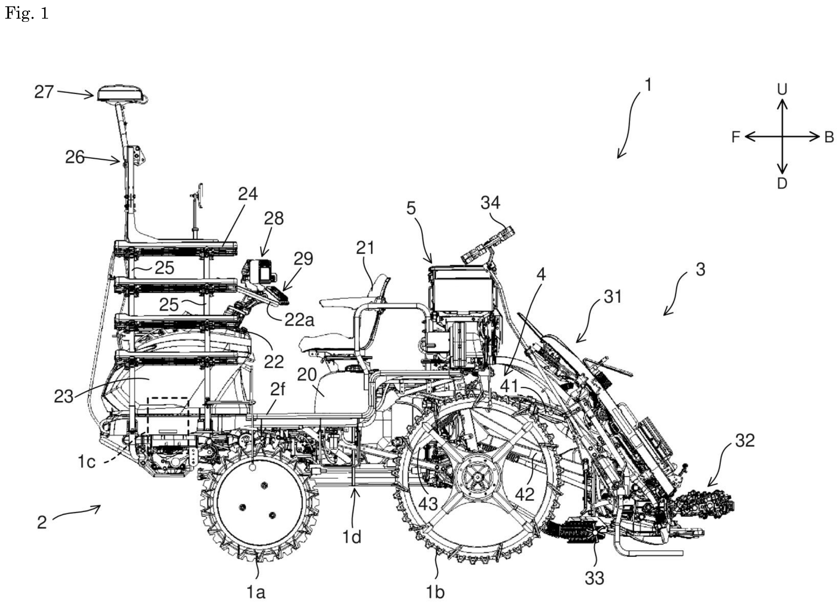

An embodiment of the present invention will be described with reference to the drawings. Note that, for convenience of the following description, directions are defined as follows unless otherwise specified in particular. First, a traveling direction (a left direction in Fig. 1) of a traveling machine body 2 of a rice transplanter 1 is defined as a front (front side), and an opposite direction to the traveling direction is defined as a back (back side). Furthermore, a left side in the traveling direction of the traveling machine body 2 will be referred to as a left (left side), and a right side in the traveling direction will be referred to as a right (right side). Furthermore, a gravity direction is an upper-lower direction, an upstream side is defined as upward (upper side), and a downstream side is defined as downward (lower side). In the drawings, as necessary, the symbol "F" represents the front, "B" represents the back, "L" represents the left, "R" represents the right, "U" represents the upper side, and "D" represents the lower side or the down side. Note that the upstream side refers to a start point side at a time when a direction is indicated by an arrow, and has the same meaning as the upper side. Furthermore, the downstream side refers to the end point side at a time when the direction is indicated by an arrow, and has the same meaning as the lower side.

Note that a display unit 28 and an operation unit 29 to be described later will be described using upper, lower, left, and right directions at a time when the display unit 28 is viewed from a direction vertical to a display screen, and the operation unit 29 will be also described using upper, lower, left, and right directions at a time when the operation unit 29 is viewed from a button pressing direction.

### <1. Overview of Rice Transplanter>

Fig. 1 is a side view illustrating a schematic configuration of the rice transplanter 1 that is an example of a work vehicle according to the embodiment of the present invention. The rice transplanter 1 includes the traveling machine body 2 and a planting unit 3.

The traveling machine body 2 is supported by left and right front wheels 1a and left and right rear wheels 1b. An engine 1c as a drive source is mounted on the traveling machine body 2. Power output from the engine 1c is transmitted to a driving target part via a transmission part 1d. The driving target part includes the planting unit 3 in addition to the front wheels 1a and the rear wheels 1b. Accordingly, the transmission part 1d includes a Power Take Off (PTO) shaft for driving the planting unit 3.

The traveling machine body 2 includes an operator's seat 21 and an operation column 22. The operator's seat 21 is provided near the center in a front-back direction of the traveling machine body 2. The operator's seat 21 is supported on a floor 2f of the traveling machine body 2 with a support stand 20 interposed therebetween. An accelerator pedal (shift pedal), a brake pedal, and the like are also disposed on the floor 2f.

The operation column 22 is disposed in front of the operator's seat 21, and a member to be operated by an operator (a manipulator or an operating person) sitting on the operator's seat 21 is disposed. For example, a steering handle 22a for the operator to operate a direction in which the rice transplanter 1 runs is disposed on the operation column 22. That is, the rice transplanter 1 includes the steering handle 22a (disposed) in front of the operator's seat 21. In addition to the steering handle 22a, various levers and switches (buttons) are disposed on the operation column 22, and will be described later. The operation column 22 is provided at an upper part on a back side of a hood 23 disposed on the front side of the traveling machine body 2. The above-described engine 1c is disposed on the lower side inside the hood 23.

The traveling machine body 2 is provided with spare seedling trays 24 for placing spare seedling mats on both of the left and right sides of the hood 23. In the present embodiment, the four spare seedling trays 24 are provided on each of the left and right sides of the hood 23 and at intervals in the upper-lower direction. Note that the number of the spare seedling trays 24 can be changed as to suitability.

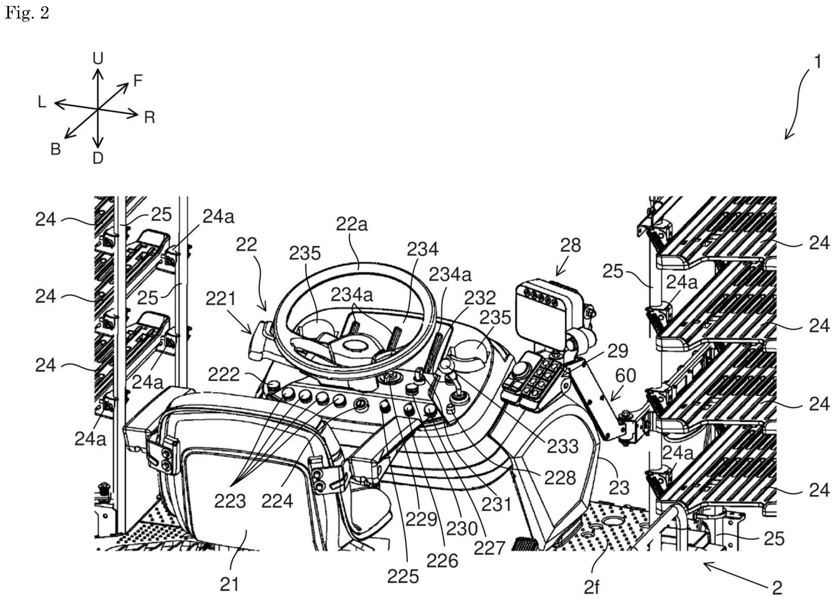

Two posts 25 extending in the upper-lower direction are provided on each of both of the left and right sides of the hood 23. On both of the left and right sides of the hood 23, the posts 25 are disposed at intervals in the front-back direction. The respective spare seedling trays 24 disposed on the right side of the hood 23 are turnably attached to the two posts 25 disposed on the right side of the hood 23 with attachment members 24a interposed therebetween (see Fig. 2). Similarly, the respective spare seedling trays 24 disposed on the left side of the hood 23 are turnably attached to the two posts 25 disposed on the left side of the hood 23 with the attachment members 24a interposed therebetween. The respective spare seedling trays 24 on the right side of the hood 23 can be folded toward the hood 23 side by turning the spare seedling trays 24 in a direction to lift the right ends. Furthermore, the respective spare seedling trays 24 on the left side of the hood 23 can be folded toward the hood 23 side by turning the spare seedling trays 24 in a direction to lift the left ends.

A positioning unit 27 is disposed at an upper part of each post 25 with a support frame 26 interposed therebetween. The positioning unit 27 is provided to acquire position information of the own vehicle by receiving a radio wave signal transmitted from a positioning satellite, and, in addition, to wirelessly communicate with an external remote monitoring device.

The display unit 28 and the operation unit 29 are disposed on the right side of the hood 23, more specifically, on the right side of the steering handle 22a. Note that details of the display unit 28 and the operation unit 29 will be described later.

The planting unit 3 is connected to the back side of the traveling machine body 2 with a lifting mechanism 4 interposed therebetween such that the planting unit 3 can be lifted up and down. The lifting mechanism 4 includes a top link 41, a lower link 42, and a lifting cylinder 43. The top link 41 and the lower link 42 connect the traveling machine body 2 and the planting unit 3. The lifting cylinder 43 is connected with the lower link 42. For example, the lifting cylinder 43 is expanded/contracted by operating a planting lifting lever 233 (see Fig. 2) of the operation column 22 to turn the lower link 42 and turn the top link 41. Consequently, the planting unit 3 can be lifted up and down with respect to the traveling machine body 2.

The planting unit 3 includes a seedling loading device 31 on which seedling mats are placed, and a seedling planting mechanism 32. The seedling planting mechanism 32 scrapes one seedling from the seedling mat placed on the seedling loading device 31, and plants the scraped seedling in a field (soil). The planting unit 3 is further provided with a rotor 33 and markers 34 that can be expanded to the left and right. The rotor 33 is provided to level a rough paddy field (e.g., headland) after revolution. The left and right markers 34 are provided to form an orbit serving as a reference for running in a next course on a paddy field. The planting unit 3 is further provided with a float for detecting a state (hardness) of the surface of the field, a rake for detecting the height of the surface of the field, and the like.

In the traveling machine body 2, a fertilization device 5 is provided between the operator's seat 21 and the planting unit 3. The fertilization device 5 feeds a predetermined amount of a fertilizer contained in a hopper at a time by driving a fertilization motor, and supplies the fertilizer to the field.

### <2. Regarding Switches and the Like of Operation Column>

In the present embodiment, part of various switches that the operator sitting on the operator's seat 21 operates at a time of work is disposed as the operation unit 29 on the right side of the steering handle 22a, and the rest of the switches and levers are disposed on the operation column 22. Hereinafter, the switches and the levers disposed on the operation column 22 will be briefly described for the purpose of clearly distinguishing the switches and the levers from the switches disposed on the operation unit 29.

Fig. 2 is a perspective view illustrating the operation column 22 as viewed diagonally from behind. In addition to the above-described steering handle 22a, a main shift lever 221 is disposed on the operation column 22. The main shift lever 221 is disposed at the depth (front side) of the steering handle 22a and extends leftward. The main shift lever 221 is a lever for switching the traveling direction (forward traveling/neutral/backward traveling) of the rice transplanter 1.

A seedling addition switch 222, planting row stop switches 223, a key switch 224, a sensitivity adjustment dial 225, a speed setting dial 226, a speed fixing switch 227, and a buzzer stop button 228 are disposed on the operation column 22 in order from the left side to the right side on a diagonal lower side of the main shift lever 221 (on the operator's seat 21 side).

The seedling addition switch 222 is pressed to replenish a seedling mat to the seedling tray of the seedling loading device 31 of the planting unit 3 from the spare seedling tray 24. The operation of the accelerator pedal is disabled in response to pressing of the seedling addition switch 222, and power transmission from the engine 1c to the planting unit 3 is also cut off. Furthermore, rotation of the engine 1c also becomes slow.

The planting row stop switch 223 is a switch for stopping planting of seedlings in a predetermined row, that is, activation of a planting finger of the seedling planting mechanism 32 and a seedling feeding belt of the seedling loading device 31. The four planting row stop switches 223 are provided side by side in the present embodiment. According to, for example, a configuration of planting seedlings in eight rows, when the leftmost planting row stop switch 223 is pressed, planting in a first row and a second row stops. When the second planting row stop switch 223 from the left is pressed, planting in a third row and a fourth row stops. When the third planting row stop switch 223 from the left is pressed, planting in a fifth row and a sixth row stops. When the fourth (rightmost) planting row stop switch 223 from the left is pressed, planting in a seventh row and an eighth row stops.

A key for starting or stopping the engine 1c is inserted into the key switch 224. The sensitivity adjustment dial 225 is operated to adjust sensitivity of hydraulic control (lifting control) according to hardness (softness) of the surface of the field. For a soft field, for example, the float is adjusted in a floating manner by turning the dial to increase the sensitivity (make the sensitivity sensitive). By contrast with this, for a hard field, the float is adjusted in a buried manner by turning the dial to lower the sensitivity (make the sensitivity dull).

The speed setting dial 226 is a dial for setting a maximum speed reached by stepping the accelerator pedal. The speed fixing switch 227 is a switch for fixing a running speed to an arbitrary speed. The buzzer stop button 228 is a button for stopping a warning sound.

A combination switch 229 is disposed on the operation column 22, and on the right side of the steering handle 22a and on a diagonal front side of the sensitivity adjustment dial 225. The combination switch 229 includes a switch for turning on/off left and right blinkers, a switch for turning on/off a work light, and a horn sounding switch.

An edge alignment button 230 is disposed on the operation column 22, and on the right side of the combination switch 229 and on a diagonal front side of the speed setting dial 226. The edge alignment button 230 is a button for aligning the seedling tray of the planting unit 3 to the edge. A hydraulic changeover switch 231 is disposed closer to the diagonal front side of the edge alignment button 230. The hydraulic changeover switch 231 is a switch for turning on/off hydraulic control (lifting control) of the planting unit 3. A robot button 232 is disposed on the right side of the hydraulic changeover switch 231. The robot button 232 is a button for enabling start of robot work (unmanned and fully automatic work) in a case where the rice transplanter 1 has a function of the robot work, and is provided as necessary.

The planting lifting lever 233 is disposed on the operation column 22, and on the diagonal front side of the buzzer stop button 228. The planting lifting lever 233 is a lever for lifting up and down the planting unit 3, turning on/off planting (clutch), and operating the markers 34.

Each of the above-described switches and levers disposed on the operation column 22 is disposed around the steering handle 22a in consideration of usability of the operator. Note that arrangement of the switches and the levers illustrated in Fig. 2 is an example, and is not limited to this arrangement.

Additionally, a lid part 234 is disposed on the operation column 22 and on the diagonal front side of the steering handle 22a. Grip parts 234a extending in a vertical direction are provided on the upper surface of the lid part 234. For example, the three grip parts 234a are provided and are disposed at intervals in a left-right direction. Note that the number of the grip parts 234a is not limited to three described above, and may be arbitrarily set.

The lid part 234 is disposed such that the lid part 234 covers and is removable from an opening at an upper part of a small item container part (not illustrated) provided inside the operation column 22. By gripping the grip parts 234a and removing the lid part 234, the operator can take and put small items (e.g., a cutter, scissors, and the like) out from and in the small item container part. Furthermore, in a state where the lid part 234 is attached to the small item container part, it is also possible to place a mobile terminal of the operator between the adjacent grip parts 234a.

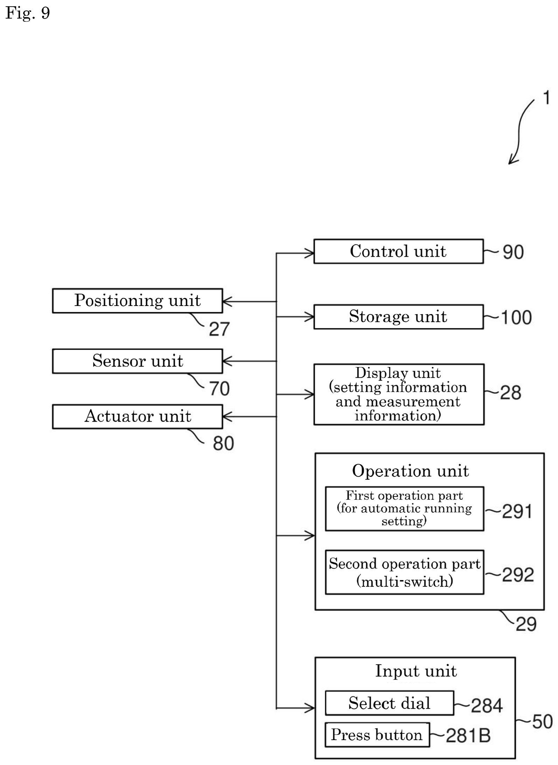

Note that a connection connector to be connected with a portable memory may be provided inside the small item container part. Furthermore, a data file (e.g., fertilization map) stored in the portable memory may be read via the connection connector and stored in a storage unit 100 (see Fig. 9) of the rice transplanter 1.

Cup holders 235 are provided to the operation column 22 and on both of the left and right sides of the lid part 234. The cup holder 235 contains and supports a beverage container such as a plastic bottle and a cup. Note that the cup holder 235 may further have a function of housing and supporting the mobile terminal of the operator.

### <3. Display Unit and Operation Unit>

As illustrated in Fig. 2, the rice transplanter 1 includes a support part 60. The support part 60 supports the display unit 28 and the operation unit 29. The support part 60 is attached to the two posts 25 disposed on the right side of the hood 23. Note that details of the support part 60 will be described later. The display unit 28 is supported by the support part 60, and thereby the display unit 28 is disposed on the right side of the steering handle 22a. That is, the rice transplanter 1 includes the display unit 28 disposed on the side of the steering handle 22a.

The display unit 28 is disposed on the side of the steering handle 22a, and thereby the operator sitting on the operator's seat 21 can visually check the display unit 28 without being blocked by the steering handle 22a. Consequently, it is possible to improve visibility of the display unit 28.

The operation unit 29 is provided separately from the display unit 28 and is supported by the support part 60. The operation unit 29 is disposed below the display unit 28. The operation unit 29 is supported by the support part 60, and thereby the operation unit 29 is disposed on the right side of the steering handle 22a. That is, the rice transplanter 1 includes the operation unit 29 disposed on the side of the steering handle 22a and apart from the display unit 28. Hereinafter, details of the display unit 28 and the operation unit 29 will be described.

### (3-1. Regarding Display Unit)

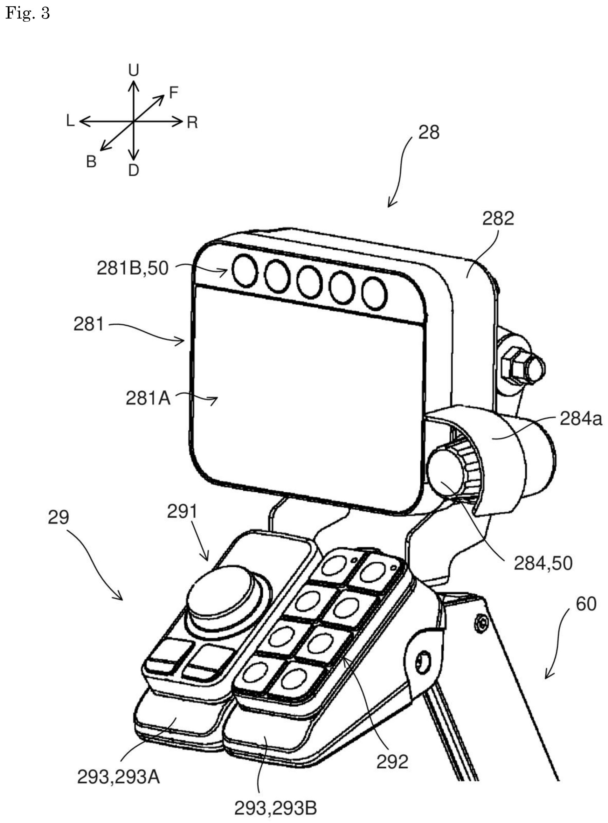

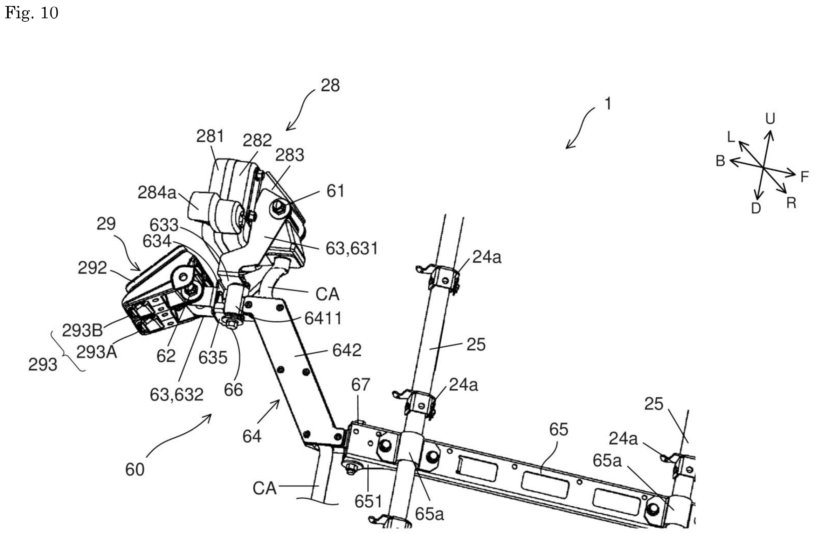

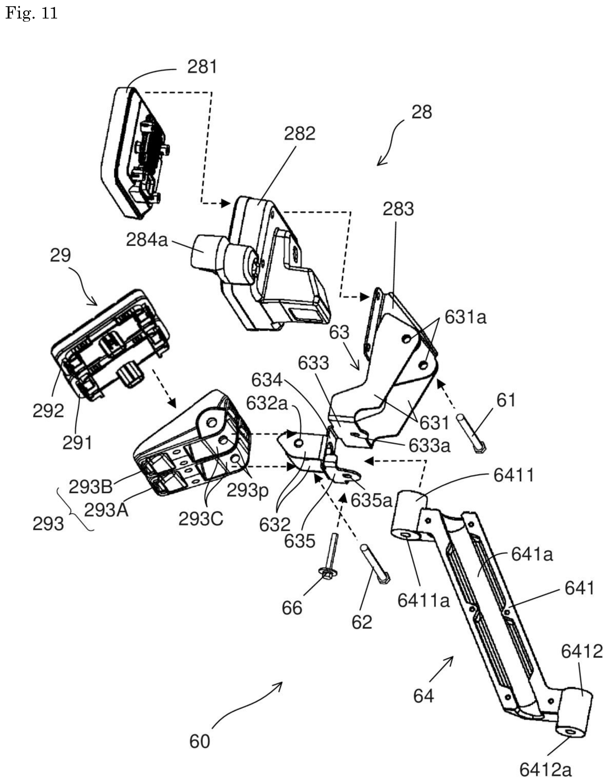

Fig. 3 is a perspective view illustrating the enlarged display unit 28 and operation unit 29 illustrated in Figs. 1 and 2. The display unit 28 includes a main body part 281 and a display back cover 282. The display back cover 282 is attached to the back surface of the main body part 281 (on the opposite side to a display screen) to support the main body part 281. The display back cover 282 is supported by the support part 60 with a support bracket 283 interposed therebetween (see Figs. 10 and 11).

The main body part 281 includes an information display unit 281A and press buttons 281B. The information display unit 281A includes, for example, a liquid crystal display device that is capable of color display, and displays various pieces of information. Note that the information display unit 281A may include another display device such as an organic Electro-Luminescence (EL) display.

### <<3-1-1. Press Button>>

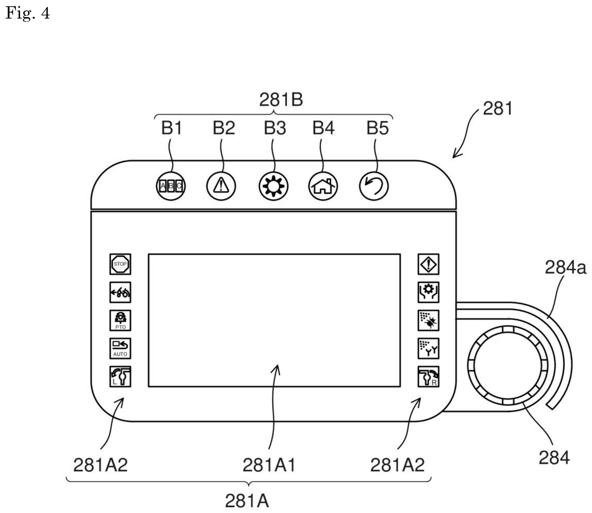

Fig. 4 is a front view of the main body part 281 of the display unit 28 as viewed from a direction vertical to the display screen of the information display unit 281A. The press button 281B is a button that is physically pressed by the operator. The press button 281B is an example of an input unit 50 that accepts various instruction inputs of the operator. The five press buttons 281B are provided side by side at the upper part of the information display unit 281A. In the example in Fig. 4, the press buttons 281B include a switch button B1, an error list display button B2, a work setting button B3, a home button B4, and a return button B5. The switch button B1, the error list display button B2, the work setting button B3, the home button B4, and the return button B5 are disposed in this order from the left to the right. Note that the number and arrangement of the press buttons 281B are not limited to the example in Fig. 4.

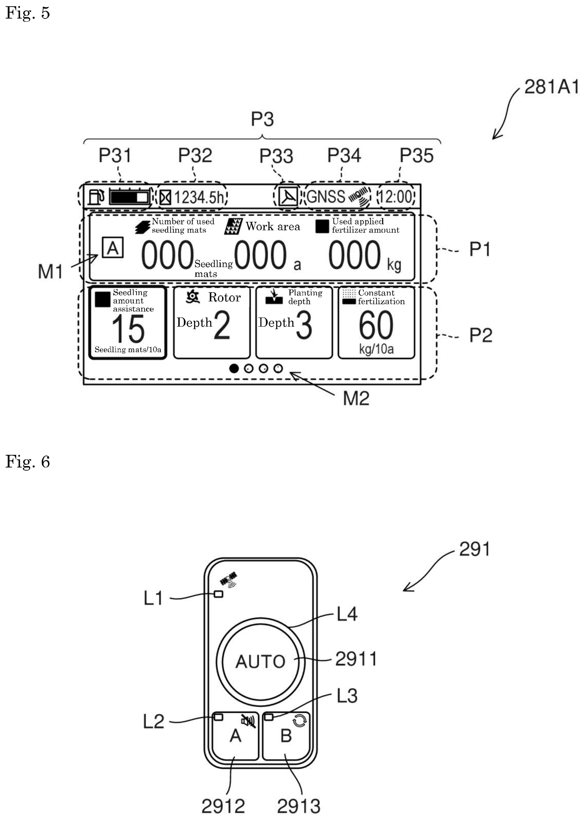

Every time the switch button B1 is pressed, a measurement start time mark M1 (see Fig. 5) displayed on a center display unit 281A1 of the information display unit 281A is switched in the order of "A", "B", and "C". Note that details of the measurement start time mark M1 will be described later. When the error list display button B2 is pressed, a list of errors having occurred so far is displayed on the center display unit 281A1. The work setting button B3 is a button for making settings related to work. When the work setting button B3 is pressed in a state where a predetermined item displayed on the center display unit 281A1 is selected by a select dial 284 to be described later, a screen directly transitions to a screen for making detailed settings on the item.

When the home button B4 is pressed, the display screen of the center display unit 281A1 transitions to a home screen illustrated in Fig. 5. When the return button B5 is pressed, the current display screen of the center display unit 281A1 transitions to a higher screen of a hierarchical structure.

### <<3-1-2. Select Dial>>

The select dial 284 is provided at a right side part of the display back cover 282. That is, the select dial 284 is disposed on the side of the display unit 28. The select dial 284 is also an example of the input unit 50. For example, by turning the select dial 284 clockwise or counterclockwise, the operator can select setting information to be displayed on the information display unit 281A from a plurality of pieces of information or cause the display screen to transition. Note that the setting information refers to, for example, information related to settings of the rice transplanter 1. Note that an example of the setting information will be described later. Furthermore, by pressing the select dial 284, it is possible to input an instruction to determine the selected item.

As described above, the rice transplanter 1 includes the input unit 50 that accepts an operator's instruction input and selects the setting information that the display unit 28 (the information display unit 281A in particular) is caused to display. Furthermore, the input unit 50 includes the press buttons 281B, and further includes the select dial 284 that can be turned and pressed. The rice transplanter 1 includes the input unit 50, so that the operator can operate the input unit 50 and make various settings. Furthermore, it is possible to select the setting information according to the operation of the input unit 50 and display the setting information on the display unit 28.

The upper side and the right side of the select dial 284 are covered with a dial cover 284a. Note that the dial cover 284a may be disposed so as to cover only the upper side of the select dial 284, or may be disposed so as to cover the upper side, the right side, and the lower side of the select dial 284. That is, it is sufficient that at least the upper side of the select dial 284 is covered with the dial cover 284a. In this case, the dial cover 284a not only serves as a rain cover for the select dial 284, but also reduces a concern that the operator touches the select dial 284 when the operator does not intend to turn the select dial 284. When, for example, the operator moves a seedling mat of the spare seedling tray 24 to the seedling tray on the back side, the dial cover 284a prevents part of the body of the operator from coming into contact with the select dial 284.

Furthermore, there is a concern that, if the lower side of the select dial 284 is covered with the dial cover 284a, rainwater accumulates at a portion of the dial cover 284a facing the lower side of the select dial 284. Hence, as illustrated in Figs. 3 and 4, it is desirable that the dial cover 284a has a shape that covers at least the upper side of the select dial 284 and opens the lower side of the select dial 284.

As described above, the press buttons 281B as the input unit 50 are provided to the main body part 281 of the display unit 28, and the select dial 284 is provided on the right side part of the display back cover 282 of the display unit 28. That is, the input unit 50 is provided integrally with the display unit 28. According to this configuration, even when the display unit 28 is supported by the support part 60 to be described later and is disposed at any turning position, the display unit 28 and the input unit 50 are kept in a constant positional relationship. Consequently, the operator can easily operate the input unit 50 at any turning position of the display unit 28.

### <<3-1-3. Information Display Unit>>

As illustrated in Fig. 4, the information display unit 281A includes a center display unit 281A1 and a peripheral display unit 281A2.

### <3-1-3-A. Peripheral Display Unit>

The peripheral display unit 281A2 is disposed around the center display unit 281A1. Icons (marks) corresponding to various pieces of information are lit up and displayed on the peripheral display unit 281A2. As a result, information corresponding to the lit-up icon is presented to the operator. Note that a design, a color, and the like of the icon to be displayed may be appropriately set.

Examples of the information displayed on the peripheral display unit 281A2, that is, the information corresponding to the icon include following information.

The information to be displayed on the left side of the information display unit 281A includes an inoperative error (the icon is lit up when work is not possible), a moving speed (the icon is lit up at, for example, a time of a high speed among a low speed and a high speed), a straight traveling assistance & PTO interlocking function ON, a simple revolution function ON, left marker expansion, and the like. Note that the straight traveling assistance refers to a function of causing the rice transplanter 1 to automatically travel straight without the operator's operation of the steering handle 22a. Furthermore, simple revolution refers to a function of automatically revolving the rice transplanter 1. Note that, at the time of simple revolution, a pedal operation is performed by the operator.

The information to be displayed on the right side of the information display unit 281A includes a warning (lighting up at a time of warning), on/off of the fertilization device 5, on/off of the insecticide/fungicide spraying device, on/off of a herbicide spraying device, right marker expansion, and the like. Note that the insecticide/fungicide spraying device and the herbicide spraying device are devices that are optionally attached to the rice transplanter 1, and corresponding icons are lit up and displayed at a time of attachment.

Although respective icons of the peripheral display unit 281A2 are displayed on the left and the right of the center display unit 281A1 in the present embodiment, the respective icon may be displayed on the upper and lower sides of the center display unit 281A1.

### <3-1-3-B. Center Display Unit>

Fig. 5 is an explanatory diagram illustrating an example of various pieces of information displayed on the center display unit 281A1. Measurement information P1, setting information P2, and state information P3 are simultaneously displayed on the center display unit 281A1. Note that the display screen in Fig. 5 will be also referred to as the home screen.

The measurement information P1 is information measured as work of the rice transplanter 1 progresses. For example, the measurement information P1 includes information related to the number of used seedling mats, a work area, and a used applied fertilizer amount. The measurement information P1 is calculated by a control unit 90 (see Fig. 9) to be described later based on the number of used seedling mats detected by a sensor unit 70 (see Fig. 9) to be described later, information on an own vehicle position detected by the positioning unit 27, a rotational speed of the fertilization motor detected by the sensor unit 70, and the like.

The measurement information P1 is displayed together with the measurement start time mark M1. The measurement start time mark M1 is a mark indicating an arbitrary measurement start time set by the operator. As the measurement start time mark M1, for example, three patterns of "A", "B", and "C" are prepared. The measurement start time mark M1 is switched and displayed in order of "A", "B", and "C" by pressing the switch button B1 (see Fig. 4). In a case where "A" is displayed as the measurement start time mark M1, information measured from the measurement start time associated with "A" is displayed as the measurement information P1. Similarly, when "B" is displayed as the measurement start time mark M1, information measured from the measurement start time associated with "B" is displayed as the measurement information P1. Furthermore, in a case where "C" is displayed as the measurement start time mark M1, information measured from the measurement start time associated with "C" is displayed as the measurement information P1.

The setting information P2 is information related to the settings of the rice transplanter 1. For example, in the example in Fig. 5, setting values such as the number of seedling mats per predetermined area, a rotor depth, a planting depth, and the applied fertilizer amount per predetermined area at a time when seedling amount assistance is set to "on" are displayed as the setting information P2. Each of the above setting values is set by selecting a predetermined item by turning and pressing the select dial 284 and selecting and determining a numerical value by turning and pressing the select dial 284.

The setting information P2 is displayed together with the measurement information P1 simultaneously (side by side) below the measurement information P1. Consequently, the operator can simultaneously check the setting information P2 and the measurement information P1 by looking at the display unit 28 (center display unit 281A1) during work of the rice transplanter 1. Accordingly, as compared with, for example, a configuration of displaying the setting information P2 and the measurement information P1 on different screens, a troublesome operation for switching the display screen is unnecessary.

The setting information P2 includes a page mark M2. The page mark M2 is a mark indicating which page of all screens the screen currently displayed on the center display unit 281A1 corresponds to. The example in Fig. 5 indicates that the screen of a 1st page/4 pages (a first page of all the four pages) is currently displayed. That is, the number of points indicated by the page mark M2 indicates a total number of pages, and a position from the left end of a black point indicates the number of pages that are being displayed. Note that, in a case where any warning is broadcast, a warning message may be displayed instead of the page mark M2.

The state information P3 is information related to the state of the rice transplanter 1. For example, as illustrated in Fig. 5, the state information P3 includes remaining fuel amount information P31, an hour meter P32, straight traveling assistance setting information P33, communication information P34, and time information P35. The state information P3 is displayed together with the measurement information P1 simultaneously (side by side) on the upper side of the measurement information P1.

The remaining fuel amount information P31 indicates a remaining fuel amount. The hour meter P32 indicates an operating time from a point of time of purchase of the rice transplanter 1. The straight traveling assistance setting information P33 indicates on/off of the straight traveling assistance function. On/off of the straight traveling assistance function is indicated by, for example, turning on/off a corresponding icon or displaying the icon with a different color. The time information P35 indicates a current time.

The communication information P34 indicates a positioning scheme (RTK/DGNSS) of the above-described positioning unit 27 (see Fig. 1) and whether a communication status with a positioning satellite is good or bad. Note that RTK represents a real-time kinematic scheme, and DGNSS represents a differential Global Navigation Satellite System (GNSS) scheme. In Fig. 5, DGNSS is described as GNSS. Whether the communication status is good or bad is indicated as follows. For example, an icon of the positioning satellite included in the communication information P34 is displayed in green when the communication status is good, the icon is displayed in red when the communication status is bad, and the icon is displayed in yellow when the communication status is between good and bad. Note that the color for displaying the icon is not limited to the above-described colors, and may be appropriately set.

In the present embodiment, the setting information P2 is displayed below the measurement information P1, yet the setting information P2 may be displayed above the measurement information P1 (e.g., between the measurement information P1 and the state information P3). Furthermore, for example, the measurement information P1 may be displayed on the left side of the center display unit 281A1, and the setting information P2 may be displayed on the right side of the center display unit 281A1. That is, in the center display unit 281A1, the measurement information P1 and the setting information P2 may be displayed simultaneously (side by side) in the upper-lower direction or the left-right direction.

### (3-2. Regarding Operation Unit)

As illustrated in Fig. 3, the operation unit 29 includes a first operation part 291, a second operation part 292, and operation support parts 293. The first operation part 291 accepts an input of settings related to automatic running of the rice transplanter 1. The second operation part 292 accepts an instruction of a predetermined operation on the rice transplanter 1. The second operation part 292 is disposed on the right next to the first operation part 291. That is, the first operation part 291 and the second operation part 292 are disposed side by side in the left-right direction. Note that the second operation part 292 may be disposed on the left next to the first operation part 291.

The operation support part 293 supports the operation unit 29. More specifically, the operation support part 293 includes a first operation support part 293A and a second operation support part 293B. The first operation support part 293A supports the first operation part 291 from below. The second operation support part 293B supports the second operation part 292 from below. The first operation support part 293A and the second operation support part 293B are formed separately, but may be integrally formed. Hereinafter, details of the first operation part 291 and the second operation part 292 will be described.

### <<3-2-1. First Operation Part>>

Fig. 6 is a front view illustrating the first operation part 291 as viewed from the button pressing direction. The first operation part 291 includes an AUTO button 2911, an A button 2912, and a B button 2913. The A button 2912 and the B button 2913 are disposed side by side on the left and the right below the AUTO button 2911 at the center.

The AUTO button 2911 is a button for instructing start of automatic running of the rice transplanter 1 based on satellite positioning. The A button 2912 and the B button 2913 are buttons pressed to create a reference line that serves as a reference for performing automatic running. For example, when the rice transplanter 1 is moved to a work start position and the A button 2912 is pressed in a state where a positioning level of a satellite radio wave is good (e.g., in a state where a lamp L1 is turned on in green), registration of a point A is completed (a lamp L2 is turned on). Furthermore, when the rice transplanter 1 is moved to a work end position of the course and the B button 2913 is pressed, registration of a point B is completed (a lamp L3 is turned on). Furthermore, a line segment that connects the point A and the point B is created as the reference line by the control unit 90 described later. When the operator manually performs an operation of revolving the rice transplanter 1 and presses the AUTO button 2911 at a predetermined timing, a lamp L4 around the AUTO button 2911 is turned on, and automatic running of the rice transplanter 1 is started. That is, the rice transplanter 1 starts automatic running along the reference line. Thereafter, manual revolution and automatic running of the rice transplanter 1 are repeatedly performed.

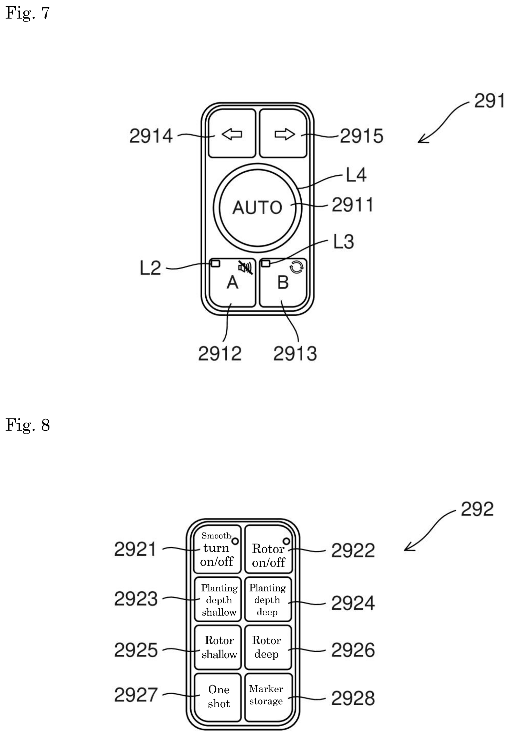

Fig. 7 is a front view illustrating another example of the first operation part 291. The first operation part 291 may further include a left button 2914 and a right button 2915 in addition to the configuration in Fig. 6. The left button 2914 is pressed to finely adjust the reference line by shifting the reference line in the left direction by a predetermined amount. The right button 2915 is pressed to finely adjust the reference line by shifting the reference line in the right direction by a predetermined amount. Note that an operation related to the automatic running is similar to the operation of the first operation part 291 in Fig. 6.

### <<3-2-2. Second Operation Part>>

Fig. 8 is a front view illustrating the second operation part 292 as viewed from the button pressing direction. Since the second operation part 292 includes a plurality of switches, the second operation part 292 will be also referred to as a multi-switch. More specifically, the second operation part 292 includes a planting unit revolution interlocking function on/off button 2921, a rotor on/off button 2922, a planting depth "shallow" setting button 2923, a planting depth "deep" setting button 2924, a rotor "shallow" setting button 2925, a rotor "deep" setting button 2926, a one shot button 2927, and a marker storage button 2928. These buttons are all press buttons for items that the operator wants to immediately operate.

The planting unit revolution interlocking function on/off button 2921 is a button for setting on/off of the planting unit revolution interlocking function. The planting unit revolution interlocking function refers to a function of automatically lifting up and down the planting unit 3, turning on/off a planting clutch (start/stop of planting), and expanding/storing the markers 34 according to the operator's operation of the steering handle 22a. Every time the planting unit revolution interlocking function on/off button 2921 is pressed once, on and off of the planting unit revolution interlocking function are switched. When the planting unit revolution interlocking function is set to "on", an upper right lamp of the planting unit revolution interlocking function on/off button 2921 is turned on. Note that, although an expression of "smooth turn on/off" is provided on the planting unit revolution interlocking function on/off button 2921 in Fig. 8, this expression is an example, and another expression may be given.

The rotor on/off button 2922 is a button for setting on/off of the rotor 33, that is, whether or not the rotor 33 is used. Every time the rotor on/off button 2922 is pressed once, on/off of the rotor 33 is switched. When the rotor 33 is set to "on", the rotor 33 moves to a preset height position, and the upper right lamp of the rotor on/off button 2922 is turned on.

The planting depth "shallow" setting button 2923 and the planting depth "deep" setting button 2924 are buttons for adjusting a planting depth. Every time the planting depth "shallow" setting button 2923 is pressed once, the planting depth is set to a shallow depth by a predetermined amount at a time. By contrast with this, every time the planting depth "deep" setting button 2924 is pressed once, the planting depth is set to a deep depth by a predetermined amount at a time.

The rotor "shallow" setting button 2925 and the rotor "deep" setting button 2926 are buttons for adjusting a height (depth) of the rotor 33. Every time the rotor "shallow" setting button 2925 is pressed once, the depth of the rotor 33 is set to a shallow depth (set to increase a height) by a predetermined amount at a time. By contrast with this, every time the rotor "deep" setting button 2926 is pressed once, the depth of the rotor 33 is set to a deep depth (set to decrease a height) by a predetermined amount at a time.

When the one shot button 2927 is pressed, the planting unit 3 moves to a preset height. When the marker storage button 2928 is pressed, the left and right markers 34 are stored.

As described above, the operation unit 29 includes the first operation part 291 and the second operation part 292. According to this configuration, the operator can set automatic running by operating the first operation part 291. Furthermore, the operator can cause the rice transplanter 1 to execute a predetermined operation by operating the second operation part 292.

Furthermore, the first operation part 291 and the second operation part 292 are disposed side by side (in the left-right direction), so that the operation unit 29 is disposed collectively as a whole. Consequently, the operator can easily operate both of the first operation part 291 and the second operation part 292.

### <4. Configuration of Control System>

Fig. 9 is a block diagram illustrating a configuration of a control system of the rice transplanter 1. The rice transplanter 1 further includes the sensor unit 70, an actuator unit 80, the control unit 90, and the storage unit 100 in addition to the above-described display unit 28 and operation unit 29.

The sensor unit 70 is a set of sensors that detect predetermined information in the rice transplanter 1. For example, a sensor that detects a rotational speed of the axle of the rice transplanter 1, a sensor that detects a rotational speed of a star wheel provided on the seedling tray of the seedling loading device 31 (see Fig. 1), a sensor that detects a rotational speed of the fertilization motor of the fertilization device 5, and the like are included in the sensor unit 70.

The actuator unit 80 is a set of mechanisms that cause respective units of the rice transplanter 1 to operate. For example, the lifting mechanism 4, a height adjustment mechanism of the rotor 33, a fertilization drive mechanism (including the fertilization motor) of the fertilization device 5, right and left inclination adjustment mechanisms of the seedling loading device 31, an expansion mechanism of the markers 34, and the like are included in the actuator unit 80. Furthermore, the actuator unit 80 includes an automatic running actuator. The automatic running actuator refers to various actuators that are activated at a time of automatic running, and includes, for example, an actuator for steering the steering handle 22a, an actuator for shifting a transmission of the transmission part 1d, and the like.

The control unit 90 includes, for example, an electronic control unit that is also called an Electronic Control Unit (ECU), and performs drive control on each unit of the rice transplanter 1. For example, operations of the traveling machine body 2 (such as forward traveling, backward traveling, stop, and revolution) and the operation of the planting unit 3 (such as lifting, driving, and stop) are controlled by the control unit 90. Furthermore, the control unit 90 controls the automatic running actuator included in the actuator unit 80 such that the rice transplanter 1 runs along a predetermined running route based on information on the own vehicle position measured by the positioning unit 27. Furthermore, the control unit 90 controls display of the display unit 28 based on operations of the input unit 50 and the operation unit 29. The control unit 90 can control each unit of the rice transplanter 1 by executing an operation program stored in the storage unit 100.

The control unit 90 can acquire predetermined information based on a detection result of the sensor unit 70. For example, the control unit 90 can calculate a running distance of the rice transplanter 1 based on a rotational speed per unit time of the axle. Furthermore, the control unit 90 can calculate a use amount of the seedling mats based on the rotational speed of the star wheel.

The storage unit 100 is a memory that stores various pieces of information, and includes a Random Access Memory (RAM), a Read Only Memory (ROM), a nonvolatile memory, and the like. In addition to the operation program of the control unit 90, the storage unit 100 stores information detected by the sensor unit 70, various setting values set by the operations of the input unit 50 (e.g., select dial 284) and the operation unit 29, and the like.

### <5. Regarding Support Part>

Next, details of the support part 60 that supports the display unit 28 and the operation unit 29 will be described. Fig. 10 is a perspective view illustrating a schematic configuration of the support part 60. Fig. 11 is an exploded perspective view of the display unit 28, the operation unit 29, and the support part 60. As illustrated in Figs. 10 and 11, the support part 60 includes a first shaft part 61, a second shaft part 62, and a support main body part 63.

The first shaft part 61 extends in a horizontal direction and supports the display unit 28 turnably in the upper-lower direction. Here, the horizontal direction is an arbitrary direction vertical to the upper-lower direction. Accordingly, the horizontal direction may be the left-right direction, or may be a direction vertical to the upper-lower direction and intersecting the left-right direction. In the following description, description continues assuming that the horizontal direction is the left-right direction.

The first shaft part 61 is formed of a bolt or the like extending in the left-right direction. The first shaft part 61 is provided so as to penetrate two upper through holes 631a of the support main body part 63 and two through holes (not illustrated) provided to the support bracket 283 of the display unit 28 in the left-right direction, and is fixed with a nut. The support bracket 283 is fixed to the display back cover 282 of the display unit 28 with a bolt or the like. The two upper through holes 631a are provided at the upper parts of two upper support pieces 631 in the support main body part 63. The upper support pieces 631 are disposed on both of the left and right sides of the support bracket 283 to sandwich the support bracket 283 from both of the left and right sides. A lower end part of each upper support piece 631 is connected in the left-right direction by the first connecting portion 633. The first connecting portion 633 is provided with a first hole part 633a penetrating in the upper-lower direction.

The second shaft part 62 extends in the horizontal direction and supports the operation unit 29 turnably in the upper-lower direction. For example, the second shaft part 62 is formed of a bolt or the like extending in the left-right direction. Furthermore, the second shaft part 62 is disposed below the first shaft part 61 and is disposed in parallel to the first shaft part 61. The second shaft part 62 is provided so as to penetrate two lower through holes 632a provided to the support main body part 63 and a plurality of openings 293p provided to the operation support parts 293 in the left-right direction. The two lower through holes 632a are provided to two lower support pieces 632 in the support main body part 63. The two lower support pieces 632 sandwich support target parts 293C provided to the operation support part 293 from the left-right direction. The support target parts 293C are provided to the bottom of each of the first operation support part 293A and the second operation support part 293B of the operation support part 293. Each lower support piece 632 is connected in the left-right direction by a second connecting portion 634.

The support main body part 63 supports the first shaft part 61 and the second shaft part 62. When the first shaft part 61 is inserted into the upper through hole 631a of each upper support piece 631, and the second shaft part 62 is inserted into the upper through hole 631a of each lower support piece 632, the first shaft part 61 and the second shaft part 62 are supported by the support main body part 63.

The first connecting portion 633 of the support main body part 63 is connected with a third connecting portion 635 with the second connecting portion 634 interposed therebetween. The third connecting portion 635 is located in parallel to the first connecting portion 633 and is located below the first connecting portion 633. The third connecting portion 635 is provided with a second hole part 635a penetrating in the upper-lower direction. Although the first connecting portion 633, the second connecting portion 634, and the third connecting portion 635 are formed in thin plate shapes, the thicknesses, the sizes, the shapes, and the like thereof can be appropriately changed.

As illustrated in Fig. 10, the support main body part 63 is attached to an attachment frame 65 with an arm 64 interposed therebetween. The attachment frame 65 is disposed to extend in the front-back direction. The attachment frame 65 is attached to the two front and rear posts 25 located on the right side of the hood 23 (see Figs. 1 and 2) with fixtures 65a interposed therebetween.

The arm 64 includes an arm body portion 641 and a flat plate 642. The arm body portion 641 extends diagonally upward with respect to the attachment frame 65. Hereinafter, the direction in which the arm body portion 641 extends will be also referred to as a longitudinal direction. As illustrated in Fig. 11, the arm body portion 641 has a recess 641a having a semicircular or U-shaped cross section and extending in the longitudinal direction. A communication cable CA (see Fig. 10) is routed through the recess 641a. Note that the communication cable CA refers to a bundle of wirings (harnesses) that connect the display unit 28, the operation unit 29, and the select dial 284 (see Fig. 3 and the like), and the control unit 90 (see Fig. 9). The cable CA is routed through the inside of the arm 64 by covering the recess 641a with the flat plate 642 and fixing the flat plate 642 with a bolt or the like in a state where the cable CA is accommodated in the recess 641a. Consequently, flutter of the cable CA is reduced.

The arm body portion 641 includes one end part provided with a first insertion part 6411, and the other end part provided with a second insertion part 6412. The first insertion part 6411 is located above the second insertion part 6412. The first insertion part 6411 is provided with a first insertion hole 6411a through which a third shaft part 66 is inserted. The first insertion hole 6411a penetrates the first insertion part 6411 in the upper-lower direction. The second insertion part 6412 is provided with a second insertion hole 6412a through which a fourth shaft part 67 is inserted. The second insertion hole 6412a penetrates the second insertion part 6412 in the upper-lower direction.

The first insertion part 6411 of the arm 64 is disposed between the first connecting portion 633 and the third connecting portion 635 of the support main body part 63. A bolt as the third shaft part 66 is inserted into the second hole part 635a of the third connecting portion 635, the first insertion hole 6411a of the first insertion part 6411, and the first hole part 633a of the first connecting portion 633 in the upper-lower direction, and is tightened with a nut. Thus, the support main body part 63 is attached to the arm 64 turnably in the left-right direction about the third shaft part 66.

The second insertion part 6412 of the arm 64 is turnably attached to a rear end part 651 of the attachment frame 65. More specifically, a hole part (not illustrated) provided to the rear end part 651 of the attachment frame 65 and the second insertion hole 6412a of the second insertion part 6412 are aligned, and a bolt as the fourth shaft part 67 is inserted into the hole part and the second insertion hole 6412a in the upper-lower direction and is tightened with a nut. Thus, the arm 64 is attached to the attachment frame 65 turnably in the left-right direction and the front-back direction about the fourth shaft part 67.

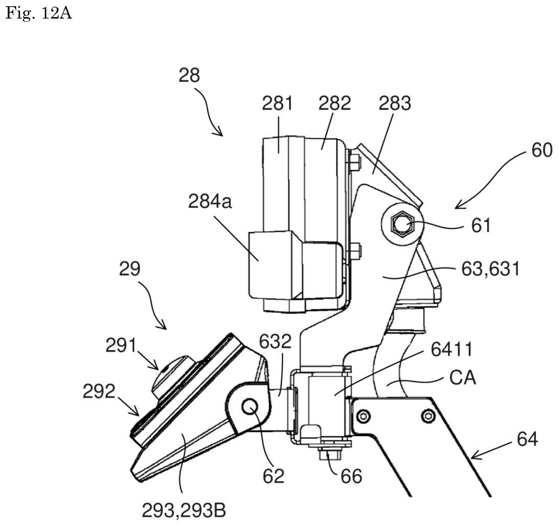

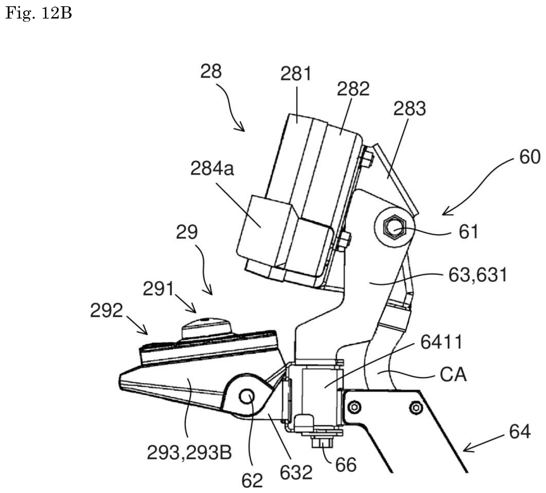

Figs. 12A and 12B are side views illustrating a state before and after the display unit 28 and the operation unit 29 change the postures with respect to the support part 60 (the support main body part 63 in particular). As described above, the display unit 28 is turnably supported by the first shaft part 61, and the first shaft part 61 is supported by the support main body part 63. Consequently, it is possible to change the posture of the display unit 28 with respect to the support main body part 63. More specifically, by loosening the nut attached to the bolt of the first shaft part 61, it is possible to turn the display unit 28 in the upper-lower direction with respect to the support main body part 63 about the first shaft part 61 extending in the horizontal direction as a center axis. By tightening and fixing the nut at a predetermined turning position in the upper-lower direction of the display unit 28, the display unit 28 is held at the turning position.

Similarly, the operation unit 29 is turnably supported by the second shaft part 62, and the second shaft part 62 is supported by the support main body part 63. Consequently, it is possible to change the posture of the operation unit 29 with respect to the support main body part 63. More specifically, by loosening the nut attached to the bolt of the second shaft part 62, it is possible to turn the operation unit 29 in the upper-lower direction with respect to the support main body part 63 about the second shaft part 62 extending in the horizontal direction as a center axis. Moreover, it is possible to turn the operation unit 29 in the upper-lower direction separately and independently of turning of the display unit 28 in the upper-lower direction. By tightening and fixing the nut at a predetermined turning position in the upper-lower direction of the operation unit 29, the operation unit 29 is held at the turning position. Note that, by forming the first operation part 291 and the second operation part 292 of the operation unit 29 as separate parts, and forming the first operation support part 293A and the second operation support part 293B as separate parts, it is also possible to separately turn the first operation part 291 and the second operation part 292, and make the turning positions in the upper-lower direction different from each other.

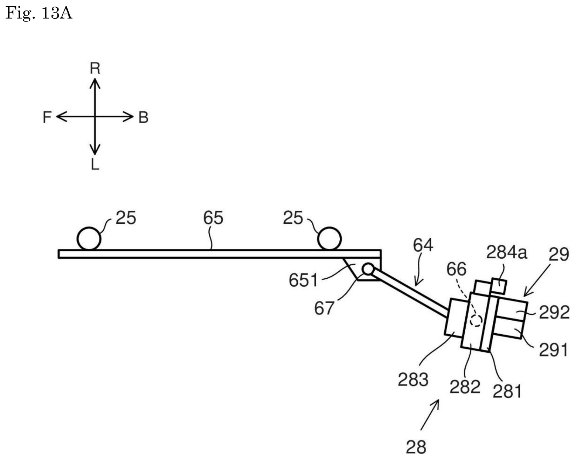

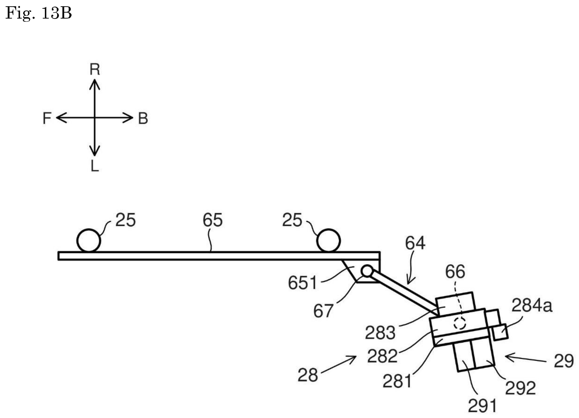

Figs. 13A and 13B are plan views schematically illustrating a state before and after the display unit 28 and the operation unit 29 turn about the third shaft part 66. As described above, the support main body part 63 is attached to the arm 64 turnably in the left-right direction about the third shaft part 66. Accordingly, by loosening the nut attached to the bolt of the third shaft part 66, it is possible to turn the display unit 28, the operation unit 29, and the support main body part 63 integrally in the left-right direction with respect to the arm 64 about the third shaft part 66. By tightening and fixing the nut at a predetermined turning positions of the display unit 28 and the operation unit 29 with respect to the arm 64, the display unit 28 and the operation unit 29 are held at the turning positions.

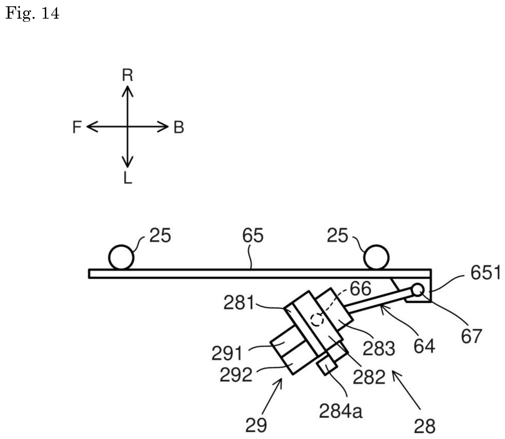

Fig. 14 is a plan view schematically illustrating a state after the display unit 28 and the operation unit 29 are turned about the fourth shaft part 67 from the state in Fig. 13A. As described above, the arm 64 is attached to the attachment frame 65 turnably in the left-right direction and the front-back direction about the fourth shaft part 67. Accordingly, by loosening the nut attached to the bolt of the fourth shaft part 67, it is possible to turn the display unit 28, the operation unit 29, the support main body part 63, and the arm 64 integrally in the left-right direction and the front-back direction with respect to the attachment frame 65 about the fourth shaft part 67. By tightening and fixing the nut at a predetermined turning position of the arm 64 with respect to the attachment frame 65, the display unit 28 and the operation unit 29 are held at the turning positions.

As described above, the display unit 28 and the operation unit 29 are supported by the support part 60 such that the postures thereof can be changed.

According to this configuration, it is possible to separately change the respective postures of the display unit 28 and the operation unit 29 according to the body shape (e.g., the height and the like) of the operator sitting on the operator's seat 21 (see Fig. 1 and the like) (see Figs. 12A and 12B). Accordingly, it is possible to dispose the display unit 28 with a posture that can be easily seen by the operator sitting on the operator's seat 21, and dispose the operation unit 29 with a posture that can be easily operated by the operator. That is, it is possible to achieve the postures of the display unit 28 and the operation unit 29 matching the operator sitting on the operator's seat 21 (suitable for the body shape of the operator).

Particularly, the posture of the display unit 28 can be changed with respect to the support part 60, so that it is possible to obtain an effect of improvement of the visibility of the display unit 28 achieved by disposing the display unit 28 on the side of the steering handle 22a regardless of the body shape (whether the height is high or low in particular) of the operator. In this respect, the configuration according to the present embodiment where the posture of the display unit 28 can be changed is more effective than a configuration where the posture of the display unit 28 is fixed.

From a viewpoint of reliably achieving appropriate positions of the display unit 28 and the operation unit 29 according to the body shape of the operator, it is desirable that the postures of the display unit 28 and the operation unit 29 can be changed by being turned in the upper-lower direction. In this respect, as in the present embodiment, the display unit 28 and the operation unit 29 are desirably supported turnably in the upper-lower direction with respect to the support part 60.

Particularly, from a viewpoint of reliably achieving a configuration where the support part 60 supports the display unit 28 turnably in the upper-lower direction and supports the operation unit 29 turnably in the upper-lower direction, the support part 60 desirably employs the following configuration. That is, the support part 60 desirably includes the first shaft part 61 that supports the display unit 28 turnably in the upper-lower direction, the second shaft part 62 that supports the operation unit 29 turnably in the upper-lower direction, and the support main body part 63 that supports the first shaft part 61 and the second shaft part 62.

As illustrated in Figs. 1 and 2 and the like, the rice transplanter 1 includes the posts 25. The posts 25 are disposed on, for example, the right side of the hood 23, that is, on the side of the operation column 22 on which the steering handle 22a is disposed, and support the spare seedling trays 24. From a viewpoint of reliably implementing the configuration where the display unit 28 and the operation unit 29 are disposed on the side of the steering handle 22a, the support part 60 that supports the display unit 28 and the operation unit 29 is desirably disposed as follows. That is, the support part 60 is desirably attached to the posts 25 (with the attachment frame 65 interposed therebetween).

### <6. Supplement>

The present embodiment has described the example where the second shaft part 62 of the support part 60 is disposed below the first shaft part 61, yet is not limited to this example. For example, the second shaft part 62 may be disposed above the first shaft part 61. That is, the second shaft part 62 may be disposed by being shifted from the first shaft part 61 in the upper-lower direction. In a case where the second shaft part 62 is disposed above the first shaft part 61, the operation unit 29 turnably supported by the second shaft part 62 is disposed above the display unit 28 turnably supported by the first shaft part 61. Accordingly, it can be also said that it is sufficient that the operation unit 29 is disposed by being shifted from the display unit 28 in the upper-lower direction.

The present embodiment has described the example where the display unit 28 and the operation unit 29 are disposed on the right side of the steering handle 22a, yet is not limited to this arrangement. For example, the display unit 28 and the operation unit 29 may be disposed on the left side of the steering handle 22a to support a left-handed operator.

The present embodiment has described the example where the support part 60 that supports the display unit 28 and the operation unit 29 is attached to the posts 25 that support the spare seedling trays 24, yet is not limited to this example. For example, a dedicated post may be vertically provided on the floor 2f of the traveling machine body 2, and the support part 60 may be attached to the post.

Although the present embodiment has cited and described the rice transplanter 1 as an example of the work vehicle, the work vehicle is not limited to the rice transplanter 1. For example, the configuration described in the present embodiment can be also applied to agricultural work vehicles such as tractors, combines, and seedling transplanters, civil engineering and construction work vehicles, and work vehicles such as snowplows.

### <7. Supplementary Note>

The work vehicle described in the present embodiment can be described as follows.

The work vehicle according to Supplementary Note (1) is a work vehicle that includes a steering handle in front of an operator's seat and includes:
a display unit that is disposed on a side of the steering handle;
an operation unit that is disposed on the side of the steering handle and apart from the display unit; and
a support part that supports the display unit and the operation unit, and
the display unit and the operation unit are supported such that postures of the display unit and the operation unit can be changed with respect to the support part.

The work vehicle according to Supplementary Note (2) is the work vehicle described in Supplementary Note (1), and
the display unit and the operation unit are supported turnably in an upper-lower direction with respect to the support part.

The work vehicle according to Supplementary Note (3) is the work vehicle described in Supplementary Note (2), and
the support part includes
a first shaft part that supports the display unit turnably in the upper-lower direction,
a second shaft part that is disposed by being shifted from the first shaft part in the upper-lower direction and supports the operation unit turnably in the upper-lower direction, and
a support main body part that supports the first shaft part and the second shaft part.

The work vehicle according to Supplementary Note (4) is the work vehicle described in Supplementary Note (3), and
the second shaft part is disposed below the first shaft part.

The work vehicle according to Supplementary Note (5) is the work vehicle described in any one of Supplementary Notes (1) to (4), and
the display unit simultaneously displays measurement information measured as work of the work vehicle progresses, and setting information related to settings of the work vehicle.

The work vehicle according to Supplementary Note (6) is the work vehicle described in Supplementary Note (5), and
further includes an input unit that accepts an instruction input of an operator and selects the setting information that the display unit is caused to display.

The work vehicle according to Supplementary Note (7) is the work vehicle described in Supplementary Note (6), and
the input unit is provided integrally to the display unit.

The work vehicle according to Supplementary Note (8) is the work vehicle described in Supplementary Note (7), and
the input unit includes a select dial that can be turned and pressed.

The work vehicle according to Supplementary Note (9) is the work vehicle described in Supplementary Note (8),
the select dial is disposed on a side of the display unit, and
at least an upper side of the select dial is covered with a dial cover.

The work vehicle according to Supplementary Note (10) is the work vehicle described in any one of Supplementary Notes (1) to (9), and
the operation unit includes
a first operation part that accepts an input of settings related to automatic running of the work vehicle, and
a second operation part that accepts an instruction of a predetermined operation to the work vehicle.

The work vehicle according to Supplementary Note (11) is the work vehicle described in Supplementary Note (10), and
the first operation part and the second operation part are disposed side by side.

The work vehicle according to Supplementary Note (12) is the work vehicle described in any one of Supplementary Notes (1) to (11), and
further includes a post that is disposed on a side of an operation column on which the steering handle is disposed and supports a spare seedling tray, and the support part is attached to the post.

Although the embodiment of the present invention has been described above, the scope of the present invention is not limited thereto, and may be expanded or modified without departing from the gist of the invention.

### INDUSTRIAL APPLICABILITY

A work vehicle according to the present invention is available for, for example, a rice transplanter that plants rice seedlings in a field.

### LIST OF REFERENCE SIGNS

- 1: Rice transplanter (work vehicle)
- 21: Operator's seat
- 22a: Steering handle
- 24: Spare seedling tray
- 25: Post
- 28: Display unit
- 29: Operation unit
- 50: Input unit
- 60: Support part
- 61: First shaft part
- 62: Second shaft part
- 63: Support main body part
- 281B: Press button (input unit)
- 284: Select dial (input unit)
- 284a: Dial cover
- 291: First operation part
- 292: Second operation part
- P1: Measurement information
- P2: Setting information

## Claims

1. A work vehicle that includes a steering handle in front of an operator's seat comprising:
a display unit that is disposed on a side of the steering handle;
an operation unit that is disposed on the side of the steering handle and apart from the display unit; and
a support part that supports the display unit and the operation unit,
wherein the display unit and the operation unit are supported such that postures of the display unit and the operation unit can be changed with respect to the support part.

2. The work vehicle according to claim 1, wherein the display unit and the operation unit are supported turnably in an upper-lower direction with respect to the support part.

3. The work vehicle according to claim 2, wherein
the support part includes
a first shaft part that supports the display unit turnably in the upper-lower direction,
a second shaft part that is disposed by being shifted from the first shaft part in the upper-lower direction and supports the operation unit turnably in the upper-lower direction, and
a support main body part that supports the first shaft part and the second shaft part.

4. The work vehicle according to claim 3, wherein the second shaft part is disposed below the first shaft part.

5. The work vehicle according to claim 1, wherein the display unit simultaneously displays measurement information measured as work of the work vehicle progresses, and setting information related to settings of the work vehicle.

6. The work vehicle according to claim 5, further comprising an input unit that accepts an instruction input of an operator and selects the setting information that the display unit is caused to display.

7. The work vehicle according to claim 6, wherein the input unit is provided integrally to the display unit.

8. The work vehicle according to claim 7, wherein the input unit includes a select dial that can be turned and pressed.

9. The work vehicle according to claim 8, wherein
the select dial is disposed on a side of the display unit, and
at least an upper side of the select dial is covered with a dial cover.

10. The work vehicle according to claim 1, wherein
the operation unit includes
a first operation part that accepts an input of settings related to automatic running of the work vehicle, and
a second operation part that accepts an instruction of a predetermined operation to the work vehicle.

11. The work vehicle according to claim 10, wherein the first operation part and the second operation part are disposed side by side.

12. The work vehicle according to any one of claims 1 to 11, further comprising a post that is disposed on a side of an operation column on which the steering handle is disposed and supports a spare seedling tray,
wherein the support part is attached to the post.
